# EUROPEAN PATENT SPECIFICATION

(11) **EP 4 279 735 B1**
(45) Date of publication and mention of the grant of the patent: **01.10.2025**
(21) Application number: 22174494.9
(22) Date of filing: 20.05.2022
(51) Int. Cl.: F03D 3/04

(54) **VORTEX DYNAMIC POWER GENERATION STRUCTURE**
DYNAMISCHE WIRBELSTROMERZEUGUNGSSTRUKTUR
STRUCTURE DE GÉNÉRATION DE PUISSANCE DYNAMIQUE TOURBILLONNAIRE

(43) Date of publication of application: 22.11.2023
(73) Proprietor: Mei, Chen-Hsin, New Taipei City, Taiwan (TW)
(72) Inventor: Mei, Chen-Hsin, New Taipei City, Taiwan (TW)
(74) Representative: Schwerbrock, Florian

(56) References cited:
- EP-A1- 3 165 763
- DE-A1- 102011 114 398
- US-A1- 2020 040 870

## Description

### BACKGROUND OF THE INVENTION

### a) Field of the Invention

The present invention relates to a structure that employs vortex dynamic power to generate electricity, in particular to a device that applies the cylindrical cavity to create and accelerate the vortex, and applies the permeable blades to absorb the kinetic energy of the vortex to generate electricity.

The present invention has four essential characters:
1. The fluid inlet is on the side of the cylindrical cavity, so that the airflow enters into the cylindrical cavity horizontally and tangentially.
2. The fluid outlet is at the center of the cylindrical cavity, so that horizontal airflow moves along the inner side of the cylindrical cavity and transformed into vortex until arrives at the center, the airflow then turns drastically toward the fluid outlet.
3. The core of the vortex exits and remains vacant area, and the higher pressure gap between the center and the fluid inlet of the cylindrical cavity is formed, the airflow will thus be accelerated constantly from the fluid inlet until arrives at the core.
4. The angular speed of the vortex is variable, the outer part of the vortex is slower, but the inner part is faster after accelerating, the angular speed of the blade is invariable, for compromising, the permeable blades are essential so that the vortex will not be blocked.

In conclusion, the present invention transforms atmosphere airflow into vortex in the cylindrical cavity by unique structure, which produces extra force to further thrust the blades.

Attachment 1 is the CFD simulation of airflow in the cylindrical cavity.

### b) Background

For large scale HAWTs (Horizontal Axis Wind Turbines), their problems are: vulnerable blades, high center of gravity, complicated structure, difficult to manufacture, transport, install, maintain, renew, demolish and recycle, danger to birds, noisy to people. In all, short lifecycle but high cost.

For VAWTs (Vertical Axis Wind Turbines), they cannot suffer strong wind due to vulnerable axis and blades, so that their size is limited.

### c) Description of the Prior Art

The present inventor has noted US4452562A which is obvious different from the present invention as follows:
For the US4452562A, "vertically disposed wind collecting tower with spaced apart inner and outer walls and a central bore. The upper end of the tower is open while the lower end of the structure is in communication with a wind intake chamber". The inflow in the square wind intake chamber cannot form the vortex, will not accelerate automatically as the tornado does.

For the present invention, the cylindrical cavity is single wall in structure, the top surface is fully covered except to center part, and the bottom has no wind intake chamber to communication. The inflow pass through plural fluid inlets at the side wall of the cylindrical cavity and exits through the fluid outlet at the center of the top surface of the cylindrical cavity, thus forms the whole wind field in the cylindrical cavity and accelerates as a tornado.

For the US4452562A, the turbine with axis is installed between the wind collecting tower and the wind intake chamber. The blades of the turbine are not permeable. The airflow passes by the blade once only. The blades cannot feedback kinetic energy to further accelerate the air flow.

For the present invention, plural permeable blades with driving axis are installed inside of the cylindrical cavity as no wind intake chamber. After the inflow has crashed with the permeable blades, it can maintain spiral route and keep accelerating to intensity the vortex as a tornado does.

One invention EP 3 165 763 A1 applies convector (5) to create a vortex.

It further applies deflect diffusers (2) to raise the vortex, a second convector (6) to direct the air towards the vortex core, a central convexity (11) to raise the vortex core and slopes (12) to enhance and raise the vortex. The blades of the turbine is impermeable.

The present invention applies a more simple construction to create a vortex, raise the core and produce extra force by means of above item 1, 2, 3 of the (a) Field of the Invention.

The present invention takes advantage of the extra force by means of above item 4 of the (a) Field of the Invention.

Another invention US 2020/0040870A1 applies various constructions and measures to improve the efficiency of a Venturi tube which causes lower air pressure and increases the speed of airflow.

The present invention has no Venturi tube but applies a more simple construction to create a vortex by means of above item 1, 2, 3 of the (a) Field of the Invention, the core/center of the vortex has lower pressure than atmosphere air pressure at the fluid inlet and can increase the speed of airflow in the cylindrical cavity.

Another invention DE 10 2011 114 398 A1 applies lateral openings (48) to collect outflowing air (54), the latter passes through lateral outflow channel (34), outlet openings (36, 38) and exhaust duct (50, 52) to exit laterally, the air flows in and then out of the cavity laterally cannot create vortex in the cavity.

The present invention locates fluid outlet at the center of the cylindrical cavity, so that can create vortex in the cylindrical cavity, the vortex produces extra force to accelerate the airflow in the cylindrical cavity.

The present inventor has simulated the air field in the cylindrical cavity of present invention with CFD, which has proven that the vortex is formed in the cylindrical cavity, lower velocity at the brim of the vortex, much higher velocity at the center of the vortex, higher pressure at the brim of the vortex, much lower pressure at the center of the vortex, the center of the vortex flows toward the outlet. All of them are coincide with the characters of cyclone or tornado. Bases above, the present inventor has created the revolutionary device to solve all problems encountered on both HAWT and VAWT.

### SUMMARY OF THE INVENTION

The tornado contains high kinetic energy. The present invention applies the compact structure of cylindrical cavity to create a miniature tornado inside of it, and collects the kinetic energy of this tornado by permeable blades to produce electricity.

In order to fulfill the above requirements, the present invention has adopted following technical measures:
The present invention is a vortex dynamic power generation structure, which consists of the cylindrical cavity, the driving mechanism and the power generating mechanism. The driving mechanism is installed inside of the cylindrical cavity.

In the above-mentioned vortex dynamic power generation structure, the fluid flows into the cylindrical cavity and forms the vortex. The vortex thrusts the driving mechanism to rotate.

In the above-mentioned vortex dynamic power generation structure, the driving mechanism connects to and drives power generating mechanism.

In the above-mentioned vortex dynamic power generation structure, the cylindrical cavity has plural fluid inlet and single fluid outlet. The fluid inlets are opened on the side of the cylindrical cavity, and the fluid outlet is opened at the center of the top surface of the cylindrical cavity.

In the above-mentioned vortex dynamic power generation structure, each fluid inlet has at least one flow regulator to regulate the volume of the incoming flow.

In the above-mentioned vortex dynamic power generation structure, the external fluid flows into the cylindrical cavity tangentially through the fluid inlet. The inflow proceeds alongside the inner surface of the cylindrical cavity, then flows toward the center along a spiral route which forms the vortex. When the inflow approaches the center, it is pressed and turns toward the fluid outlet to exit.

In the above-mentioned vortex dynamic power generation structure, the driving mechanism consists of the rotating shaft which is installed at the center of the cylindrical cavity, and the blade set which is connected to the rotating shaft.

In the above-mentioned vortex dynamic power generation structure, the blade set has plural radially distributed brackets. The blades are permeable and attached to the brackets. The blades can be in net, grid, bar, or separated plane shape. The blades can also be attached to the rotating shaft directly.

In the above-mentioned vortex dynamic power generation structure, the inflow thrusts the blade sets, the blade sets drives the rotating shaft, and the rotating shaft drives the power generating mechanism to produce electricity.

In the above-mentioned vortex dynamic power generation structure, the cylindrical cavity has the heater inside to accelerate the flow.

In the above-mentioned vortex dynamic power generation structure, at least one end of the rotating shaft has a connecting part, which can be connected to the power generating mechanism. In case plural cylindrical cavities with plural driving mechanisms inside are stacked up, plural driving mechanisms \can be connected by connecting parts.

### BRIEF DESCRIPTION OF THE DRAWINGS

Figure 1 is the schematic diagram of the external structure of the first embodiment of the present invention.
Figures 1a and 1b are the top view and the side view of the cylindrical cavity of the first embodiment of the present invention.
Figures 2a, 2b, 2c, 2d and 2e are the schematic diagrams of the driving mechanism with various blade shapes of the first embodiment of the present invention.
Figure 3a is the schematic top view of the power generating mechanism according to the first embodiment of the present invention.
Figure 3b is the schematic side view of the power generating mechanism of the first embodiment of the present invention.
Figure 4a is the schematic top view of the fluid route in the cylindrical cavity of the first embodiment of the present invention.
Figure 4b is the schematic side view of the fluid route in the cylindrical cavity of the first embodiment of the present invention.
Figure 4c is the vector analysis diagram of the part A in the Figure 4a of the first embodiment of the present invention.
Figure 5a is the schematic top view of the fluid route in the cylindrical cavity of the second embodiment of the present invention.
Figure 5b is the schematic side view of the fluid route in the cylindrical cavity of the second embodiment of the present invention.
Figure 6 is the schematic diagram of plural cylindrical cavities with driving mechanisms inside stacked up on power generating mechanism to constitute the vortex dynamic power generation structure which is the third embodiment of the present invention.
Figure 7 is the first embodiment of the present invention with external baffles to increase the volume, pressure and speed of the inflow.

### DETAILED DESCRIPTION OF THE PREFERRED EMBODIMENTS

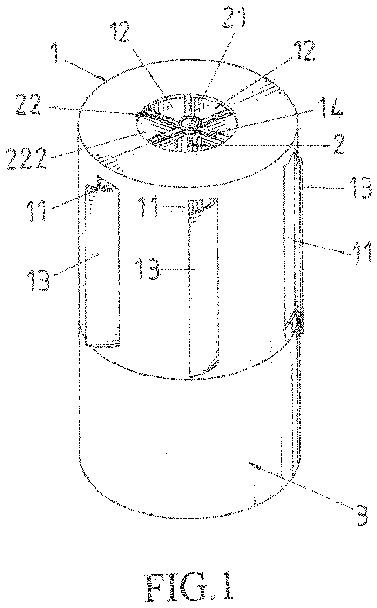

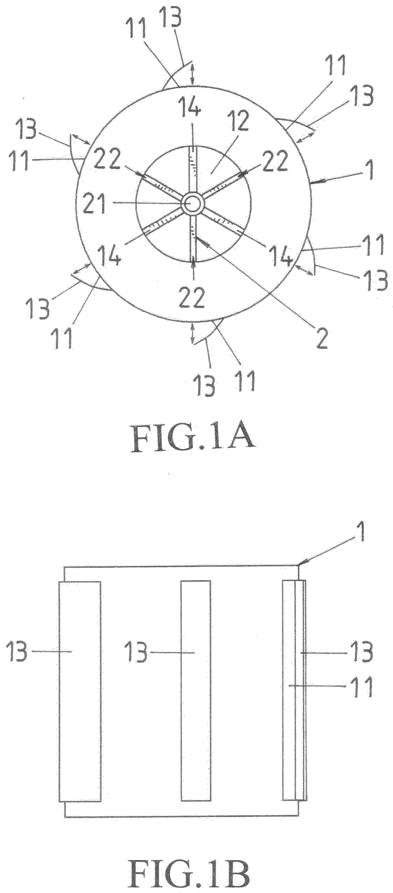

Please refer to Figures 1 to 6, which are the schematic diagrams of various embodiments of the present invention. As shown in these figures, the present invention is a vortex dynamic power generation structure which consists of the cylindrical cavity 1, the driven mechanism 2 and the power generating mechanism 3.

As shown in Figure 1, the cylindrical cavity 1 has plural fluid inlets 11 at the side surface and single fluid outlet 12 at the center of the top surface. The external fluid flows into the cylindrical cavity 1 tangentially through the fluid inlets 11, and exits through the fluid outlet 12. As shown in figures 1a and 1b, the fluid inlet 11 has the flow regulator 13. The flow regulator 13 control the opening and closing of the fluid inlets 11 to regulate the volume, pressure and speed of the inflow 41.

As shown in Figure 1, the driven mechanism 2 is installed inside of the cylindrical cavity 1.

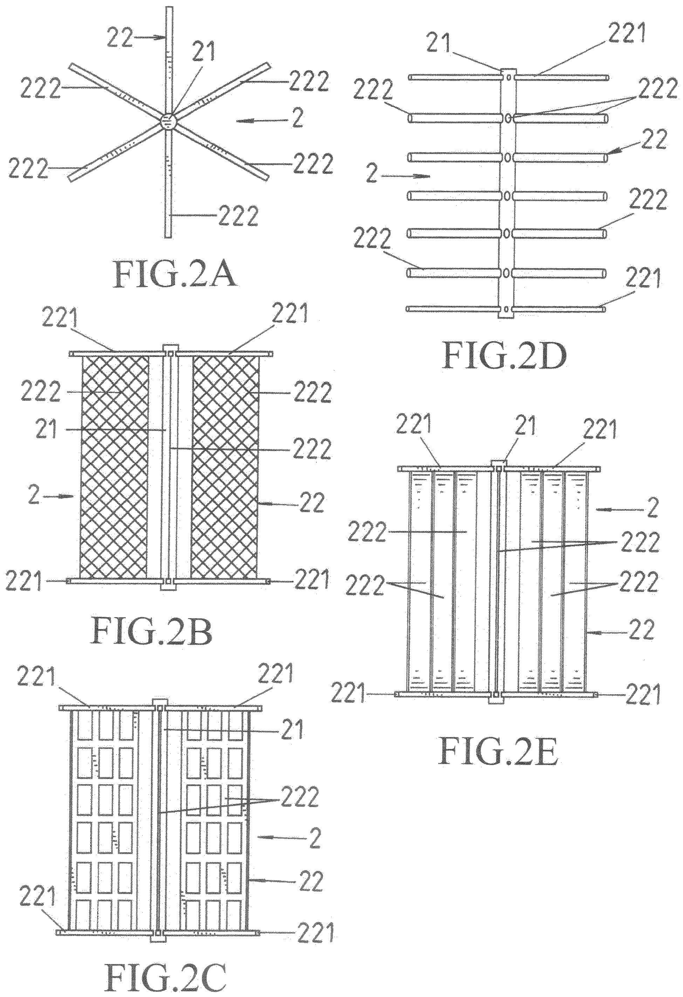

As shown in Figure 2a, in the first embodiment of the present invention, the driven mechanism 2 consists of the rotating shaft 21 and the blade set22. The rotating shaft 21 locates at the center of the cylindrical cavity 1, and the blade set 22 is connected to the rotating shaft 21. To thrust the blade set 22 can drive the rotating shaft 21, and the driven mechanism 2 can generate kinetic energy accordingly.

As shown in Figure 2b, in the first embodiment of the present invention, the blade set 22 consists of the radially distributed brackets 221 and plural permeable blades 222. The brackets 221 are connected to the rotating shaft 21, and the permeable blades 222 are attached to the brackets 221 or directly attached to the rotating shaft 21 (as shown in Figure 2d). The permeable blades 222 can be mesh shape (as shown in Figure 2b), grid shape (as shown in Figure 2c), bar shape (as shown in Figure 2d) or separated plane shape (as shown in Figure 2e). The blade 222 is permeable, so that the inflow 41 can pass through, maintain its spiral route 51 and accelerates. The blade 222 can feedback its kinetic energy to accelerate the vortex.

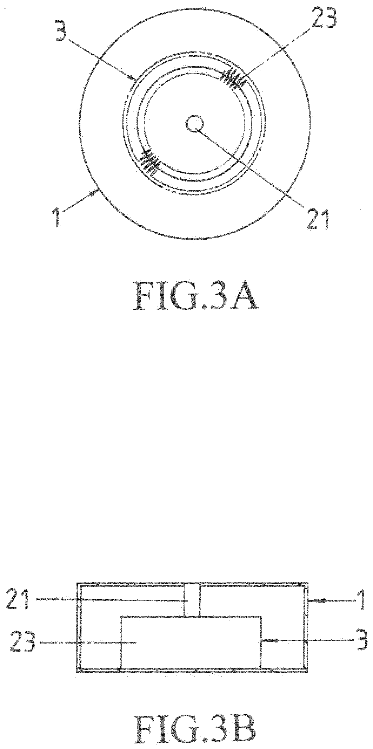

As shown in Figures 3a and 3b, in the first embodiment of the present invention, the cylindrical cavity 1 has a heater 23 inside to accelerate the fluid. All kinds of heating sources including wasted heat can be applied.

As shown in Figure 3b, the power generating mechanism 3 is connected to and driven by the driven mechanism 2, so that the electric generator 31 in the power generating mechanism 3 can generate electricity.

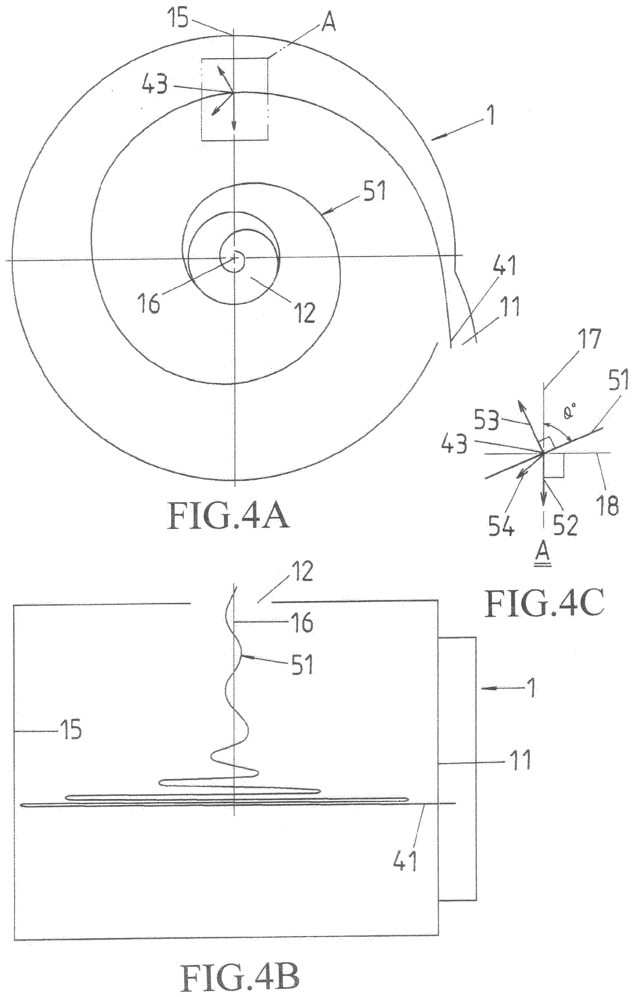

As shown in Figure 4a and 4c, the present invention guides the external fluid (such as wind) to flow tangentially into the cylindrical cavity 1. The inflow 41 proceeds alongside the inner surface of the cavity 15 due to persistent pressure behind, then proceeds along the spiral route 51 until approaching the axis 16, and finally turns toward the outlet 12. The flow field from the fluid inlets 11 to the fluid outlet 12 is thus formed, the pressure at the fluid inlets 11 and alongside the inner surface of the cavity 15 are the highest, the direction of outflow 42 is certainly perpendicular to the atmosphere wind direction, so the pressure at fluid outlet 12 is the lowest (Bernoulli's effect). The pressure dwindles from the inner surface of cavity 15 to the axis 16 while the velocity escalates from the inner surface of cavity 15 to the axis 16. The cylindrical cavity 1 has created an accelerative flow field inside, similar to a tornado.

As shown in Figures 4a and 4c, the pressure dwindles from the inner surface of the cavity 15 to the axis 16. The fluid molecule 43 proceeds along the spiral route 51 suffers the pressure gradient force 52 that toward the axis 16 and the Coriolis force 53 that perpendicular to the spiral route 51. The above two forces generate the combined vector force 54 which increases the velocity "v" of the fluid molecule 43. Meanwhile, the turning radius of the fluid molecule 43 dwindles along the spiral route 51 which causes angular velocity "ω" to escalate. According to the formula that Coriolis force F = -2m(ωv), F, ω and v increase simultaneously due to interactive feedback. The unique structure of the cylindrical cavity 1 accelerates the inflow 41 automatically.

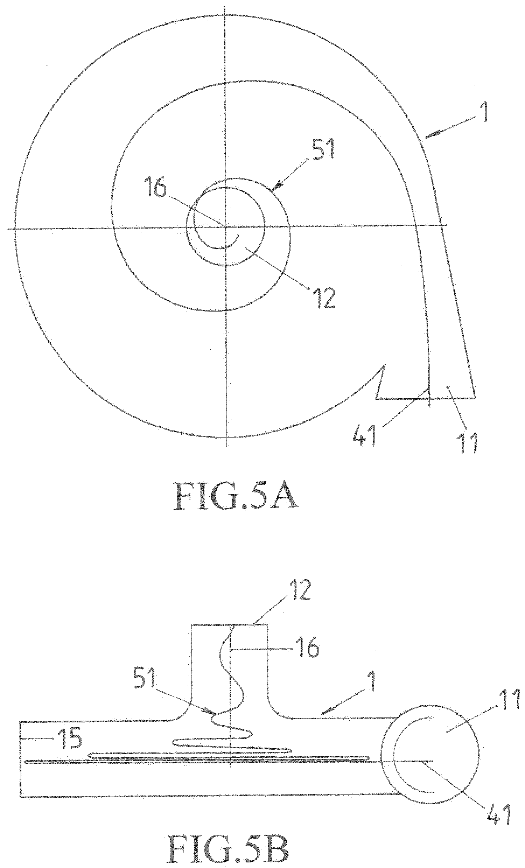

As shown in Figures 5a and 5b, the second embodiment of the present invention is the structure that automatically accelerate the inflow 41 in the cylindrical cavity 1. The inlet 11 is funnel shaped to accept more inflow 41.

As shown in Figures 4a, the inflow 41 accelerates along the spiral route 51 and rotates the blade set 22 (As shown in Fig 2a). The inner part of the blade set 22 suffers more thrust than the outer part, the blade set 22 will be further thrust and accelerates the inflow 41, which causes interactive feedback between the inflow 41 and the blade set 22.

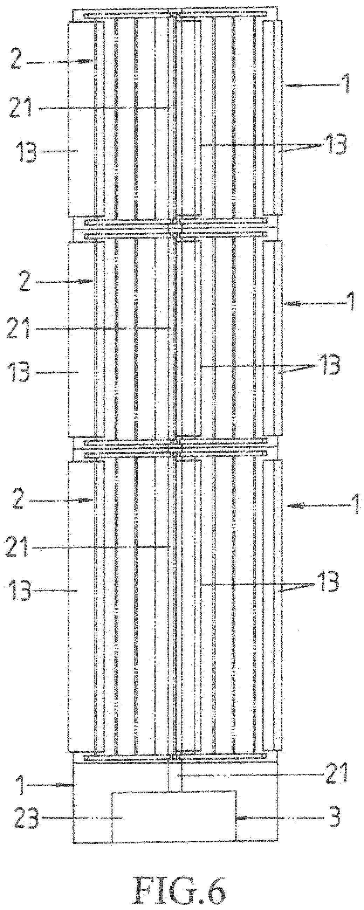

Please refer to Figure 6, in the third embodiment of the present invention, at least one end of the rotating shaft 21 of the driving mechanism 2 to be provided with a connecting portion (not shown in the figure). In case stacking plural cylindrical cavities 1 to constitute the vortex dynamic power generation structure, plural driven mechanisms 2 in plural cylindrical cavities 1 can be connected, and the power generating mechanism 3 is connected to the terminal driven mechanism 2. The center of end surfaces between plural cylindrical cavities 1 are opened for fluid to pass through. The power generating mechanism 3 can be the combination of several electric generators to match various wind scale.

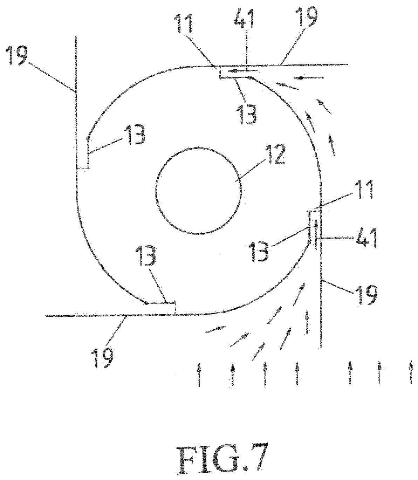

Please refer to Figure 7, in the first embodiment of the present invention. The baffles 19 are installed out of the fluid inlets 11 to increase the volume and velocity of the inflow 41.

In the first embodiment of the present invention, the cylindrical cavity 1 can be installed in the river or the sea current and apply water as inflow 41. The power generating mechanism 3 to be installed on the top of the cylindrical cavity 1, the fluid outlet 12 to be at the bottom with drainpipe toward downstream. The flow speed at inner surface of the cavity 15 is slower which causes higher pressure. The Coriolis force 53 of the inflow 41 together with the pressure gradient force 52 generate the combined vector force 54, which accelerates the inflow 41 to flow toward the axis 16 then turns downward to fluid outlet 12. The inflow 41 thrusts the blade set 22 and rotates the rotating shaft 21, which drives the rotating shaft 21 of the power generating mechanism 3 to generate electricity.

In summary, the present invention of vortex dynamic power generation structure, plural fluid inlets are opened at the vertical side of the cylindrical cavity, the fluid outlet is opened at the center of the end surface of the cylindrical cavity. The external fluid enters the cylindrical cavity tangentially through the inlet and exits through the outlet at the top surface. The driving mechanism which is inside of the cylindrical cavity consists of the rotating shaft and the permeable blade set. The inflow thrusts the plural permeable blade set and rotating shaft to turn. By applying plural permeable blades, the inflow can maintain spiral route and accelerate, also to drive the power generating mechanism to generate electricity.

## Claims

1. A vortex dynamic power generation structure, which consists of:
a cylindrical cavity (1), which has plural fluid inlets (11) at a vertical side and a fluid outlet (12) at a center of a top surface of the cylindrical cavity (1), the **characterized in that**:
the fluid inlets (11) are configured to cause an external fluid to flows into the cylindrical cavity (1) tangentially through the fluid inlets (11),
an inner surface of the cylindrical cavity (1) is configured to allow the external fluid to flow from the fluid inlets (11) along the inner surface; and
the fluid outlet (12) is configured to cause the flow of external fluid to proceed from the inner surface toward an axis of the cylindrical cavity (1) along a spiral route (51) and finally turn towards the fluid outlet (12) to exit;
a driven mechanism (2), which is installed inside of the cylindrical cavity (1), the driven mechanism (2) consists of a rotating shaft (21) and a blade set (22), the rotating shaft (21) locates at the axis of the cylindrical cavity (1), and the blade set (22) consists of brackets (221) and plural permeable blades (222), the blade set (22) is connected to the rotating shaft (21), wherein the plural permeable blades (222) are configured to allow the flow of external fluid to crash with the permeable blades (222) to drive the rotating shaft (21) and maintain the spiral route (51) of the external fluid; and
a power generating mechanism (3), which is connected to and driven by the driven mechanism (2) to generate electricity.

2. The vortex dynamic power generation structure according to claim 1, wherein the fluid inlets (11) have the flow regulator (13) which controls the volume of the inflow (41).

3. The vortex dynamic power generation structure according to claim 1, wherein the power generating mechanism (3) is connected to either end of the driven mechanism (2), and installed at inside or outside of the cylindrical cavity (1).

4. The vortex dynamic power generation structure according to claim 1, wherein a heater (23) is provided inside of the cylindrical cavity.

5. The vortex dynamic power generation structure according to claim 1, wherein the blade set (22) has plural radially distributed brackets with plural permeable blades (222), the brackets (221) are connected to the rotating shaft (21), and the permeable blades (222) are attached to the brackets (221) or directly attached to the rotating shaft (21).

6. The vortex dynamic power generation structure according to claim 1, wherein the permeable blades (222) are in mesh, grid, bar, or separated plane shape.

7. The vortex dynamic power generation structure according to claim 1, wherein at least one end of the rotating shaft (21) is provided with a connecting portion, in case plural cylindrical cavities (1) with plural driven mechanisms (2) inside are stacked up, the center of end surfaces between the cylindrical cavities (1) are opened for fluid to pass through, and all of the rotating shafts (21) can be connected by the connecting portion.

8. The vortex dynamic power generation structure according to claim 1, wherein baffles (19) are installed out of the fluid inlets (11) to increase the volume, pressure and speed of the inflow (41).

9. The vortex dynamic power generation structure according to claim 1, wherein the power generating mechanism (3) consists of plural electric generators in combination to match various wind scale.

## Patentansprüche

1. Wirbeldynamische Stromerzeugungsstruktur, die aus Folgendem besteht:
einem zylindrischen Hohlraum (1), der mehrere Fluideinlässe (11) an einer vertikalen Seite und einen Fluidauslass (12) in der Mitte einer oberen Fläche des zylindrischen Hohlraums (1) aufweist, **dadurch gekennzeichnet, dass**:
die Fluideinlässe (11) konfiguriert sind, um zu veranlassen, dass ein externes Fluid tangential durch die Fluideinlässe (11) in den zylindrischen Hohlraum (1) fließt,
eine Innenfläche des zylindrischen Hohlraums (1) konfiguriert ist, um zu gestatten, dass das externe Fluid von den Fluideinlässen (11) entlang der Innenfläche fließen kann; und
der Fluidauslass (12) konfiguriert ist, um zu veranlassen, dass der Fluss des externen Fluids von der Innenfläche zu einer Achse des zylindrischen Hohlraums (1) entlang einer spiralförmigen Route (51) fortschreitet und sich schließlich zum Fluidauslass (12) dreht, um auszutreten;
einen angetriebenen Mechanismus (2), der im Inneren des zylindrischen Hohlraums (1) installiert ist, wobei der angetriebene Mechanismus (2) aus einer rotierenden Welle (21) und einem Schaufelsatz (22) besteht, die rotierende Welle (21) an der Achse des zylindrischen Hohlraums (1) angeordnet ist und der Schaufelsatz (22) aus Halterungen (221) und mehreren durchlässigen Schaufeln (222) besteht, der Schaufelsatz (22) mit der rotierenden Welle (21) verbunden ist, wobei die mehreren durchlässigen Schaufeln (222) konfiguriert sind, um dem Fluss des externen Fluids zu gestatten, mit den durchlässigen Schaufeln (222) zusammenzustoßen, um die rotierende Welle (21) anzutreiben und die spiralförmige Route (51) des externen Fluids beizubehalten; und
einen Stromerzeugungsmechanismus (3), der mit dem angetriebenen Mechanismus (2) verbunden ist und von diesem angetrieben wird, um Strom zu erzeugen.

2. Wirbeldynamische Stromerzeugungsstruktur nach Anspruch 1, wobei die Fluideinlässe (11) den Durchflussregler (13) aufweisen, der das Volumen des Zuflusses (41) steuert.

3. Wirbeldynamische Stromerzeugungsstruktur nach Anspruch 1, wobei der Stromerzeugungsmechanismus (3) mit einem der beiden Enden des angetriebenen Mechanismus (2) verbunden ist und innerhalb oder außerhalb des zylindrischen Hohlraums (1) installiert ist.

4. Wirbeldynamische Stromerzeugungsstruktur nach Anspruch 1, wobei eine Heizung (23) im Inneren des zylindrischen Hohlraums vorgesehen ist.

5. Wirbeldynamische Stromerzeugungsstruktur nach Anspruch 1, wobei der Schaufelsatz (22) mehrere radial verteilte Halterungen mit mehreren durchlässigen Schaufeln (222) aufweist, die Halterungen (221) mit der rotierenden Welle (21) verbunden sind und die durchlässigen Schaufeln (222) an den Halterungen (221) oder direkt an der rotierenden Welle (21) befestigt sind.

6. Wirbeldynamische Stromerzeugungsstruktur nach Anspruch 1, wobei die durchlässigen Schaufeln (222) die Form von Maschen, Gittern, Stäben oder getrennten Ebenen haben.

7. Wirbeldynamische Stromerzeugungsstruktur nach Anspruch 1, wobei mindestens ein Ende der rotierenden Welle (21) mit einem Verbindungsabschnitt versehen ist, für den Fall, dass mehrere zylindrische Hohlräume (1) mit mehreren angetriebenen Mechanismen (2) darin gestapelt sind, die Mitte der Endflächen zwischen den zylindrischen Hohlräumen (1) für den Durchgang von Fluid geöffnet sind und alle rotierenden Wellen (21) durch den Verbindungsabschnitt verbunden werden können.

8. Wirbeldynamische Stromerzeugungsstruktur nach Anspruch 1, wobei Umlenkbleche (19) außerhalb der Fluideinlässe (11) installiert sind, um das Volumen, den Druck und die Geschwindigkeit des Zuflusses (41) zu erhöhen.

9. Wirbeldynamische Stromerzeugungsstruktur nach Anspruch 1, wobei der Stromerzeugungsmechanismus (3) aus mehreren kombinierten elektrischen Generatoren besteht, um verschiedenen Windstärken gerecht zu werden.

## Revendications

1. Une structure de génération de puissance dynamique tourbillonnaire, qui est composée :
d'une cavité cylindrique (1) qui comporte une pluralité d'entrées de fluide (11) sur une face verticale et une sortie de fluide (12) en un centre d'une surface supérieure de la cavité cylindrique (1), **caractérisée en ce que** :
les entrées de fluide (11) sont configurées pour amener un fluide externe à s'écouler dans la cavité cylindrique (1) tangentiellement à travers les entrées de fluide (11),
une surface intérieure de la cavité cylindrique (1) est configurée pour permettre au fluide externe de s'écouler depuis les entrées de fluide (11), le long de la surface intérieure, et
la sortie de fluide (12) est configurée pour amener le flux de fluide externe à évoluer de la surface intérieure vers un axe de la cavité cylindrique (1) le long d'une spirale (51), pour finalement tourner en direction de la sortie de fluide (12) afin de sortir ;
un mécanisme entraîné (2), qui est installé à l'intérieur de la cavité cylindrique (1), le mécanisme entraîné (2) étant composé d'un arbre rotatif (21) et d'un ensemble de pales (22), l'arbre rotatif (21) étant situé au niveau de l'axe de la cavité cylindrique (1), et l'ensemble de pales (22) étant composé de supports (221) et d'une pluralité de pales perméables (222), l'ensemble de pales (22) étant raccordé à l'arbre rotatif (21), où la pluralité de pales perméables (222) est configurée pour permettre au flux de fluide externe d'entrer en collision avec les pales perméables (222) pour entraîner l'arbre rotatif (21) et maintenir la spirale (51) du fluide externe, et
un mécanisme de génération de puissance (3) qui est raccordé au mécanisme entraîné (2) et qui est entraîné par celui-ci pour générer de l'électricité.

2. La structure de génération de puissance dynamique tourbillonnaire selon la revendication 1, où
les entrées de fluide (11) comportent le régulateur de débit (13) qui contrôle le volume du flux entrant (41).

3. La structure de génération de puissance dynamique tourbillonnaire selon la revendication 1, où
le mécanisme de génération de puissance (3) est raccordé à l'une ou l'autre des extrémités du mécanisme entraîné (2) et installé à l'intérieur ou à l'extérieur de la cavité cylindrique (1).

4. La structure de génération de puissance dynamique tourbillonnaire selon la revendication 1, où
un réchauffeur (23) est prévu à l'intérieur de la cavité cylindrique.

5. La structure de génération de puissance dynamique tourbillonnaire selon la revendication 1, où
l'ensemble de pales (22) comporte une pluralité de supports répartis radialement, avec une pluralité de pales perméables (222), les supports (221) étant raccordés à l'arbre rotatif (21) et les pales perméables (222) étant fixées aux supports (221) ou fixées directement à l'arbre rotatif (21).

6. La structure de génération de puissance dynamique tourbillonnaire selon la revendication 1, où
les pales perméables (222) sont en forme de maillage, de grille, de barre ou de plan séparé.

7. La structure de génération de puissance dynamique tourbillonnaire selon la revendication 1, où
au moins une extrémité de l'arbre rotatif (21) est munie d'une section de raccordement au cas où une pluralité de cavités cylindriques (1), avec une pluralité de mécanismes entraînés (2) à l'intérieur, seraient empilées, le centre des surfaces d'extrémité entre les cavités cylindriques (1) étant ouvert pour permettre le passage du fluide et tous les arbres rotatifs (21) pouvant être raccordés par la section de raccordement.

8. La structure de génération de puissance dynamique tourbillonnaire selon la revendication 1, où
des chicanes (19) sont installées en dehors des entrées de fluide (11) pour augmenter le volume, la pression et la vitesse du flux entrant (41).

9. La structure de génération de puissance dynamique tourbillonnaire selon la revendication 1, où
le mécanisme de génération de puissance (3) est composé d'une pluralité de générateurs électriques en combinaison pour s'adapter à différentes échelles de vent.
